(19) Europäisches Patentamt
European Patent Office
Office européen des brevets

(11) Veröffentlichungsnummer: 0 339 421 A2

# (12) EUROPÄISCHE PATENTANMELDUNG

(21) Anmeldenummer: 89106823.1

(22) Anmeldetag: 17.04.89

(51) Int. Cl.⁴: C09B 69/10 , C09B 43/155 , C09B 1/38 , C08L 75/04 , //C09B47/26

(30) Priorität: 29.04.88 DE 3814531

(43) Veröffentlichungstag der Anmeldung: 02.11.89 Patentblatt 89/44

(84) Benannte Vertragsstaaten: CH DE FR GB IT LI

(71) Anmelder: BAYER AG

D-5090 Leverkusen 1 Bayerwerk(DE)

(72) Erfinder: Weber, Karl-Arnold, Dr.
Saarstrasse 59
D-5090 Leverkusen(DE)
Erfinder: Henk, Hermann, Dr.
Roggendorfstrasse 55
D-5000 Köln 80(DE)
Erfinder: Kunde, Klaus, Dr.
Moltkestrasse 5
D-5206 Neunkirchen(DE)
Erfinder: Westphal, Jochen, Dr.
Am Rittersberg 43
D-4000 Düsseldorf 13(DE)
Erfinder: Wunderlich, Klaus, Dr.
Carl-Rumpff-Strasse 21
D-5090 Leverkusen(DE)

## (54) Farbmittel.

(57) Farbmittel, die dadurch erhältlich sind, daß man einen Farbstoff, der frei von ionischen Gruppen ist und ≧2 $NH_2$-Gruppen besitzt, die vorzugsweise so angeordnet sind, daß sie sich nicht an der Mesomerie des Chromophors beteiligen, mit einer solchen Menge eines (cyclo)aliphatischen Diisocyanats, gegebenenfalls in Gegenwart eines organischen Lösungsmittels, unter Addition umsetzt, daß das Reaktionsprodukt noch mindestens zwei freie -NCO-Gruppen enthält, und man anschließend dieses Reaktionsprodukt mit einem (cyclo)-aliphatischem Diamin, gegebenenfalls in Gegenwart eines organischen Lösungsmittels, unter Addition umsetzt eignen sich zur Färbung und Pigmentierung makromolekularer Stoffe, insbesondere zur Farbgebung von Lackierungen, Beschichtungen und Kaschierungen auf PUR-Basis.

EP 0 339 421 A2

## Farbmittel

Die Erfindung betrifft Farbmittel, Verfahren zu ihrer Herstellung und ihre Verwendung, insbesondere zur migrationsechten Färbung von Polymeren.

Zur migrationsechten Einfärbung von Polymeren finden anorganische und organische Pigmente sowie sogenannte Einbaufarbstoffe Verwendung. Neben Problemen bei der Einarbeitung dieser Farbmittel in das polymere Material ist ihre Migrationsstabilität in vielen Fällen unbefriedigend.

Überraschenderweise wurde nun gefunden, daß sich die im folgenden beschriebenen neuen Farbmittel problemlos in Polymere einarbeiten lassen, migrationsechte Färbungen gewährleisten und je nach Anwendungsgebiet weitere Vorteile gegenüber bekannten Farbmitteln haben.

Die neuen Farbmittel sind dadurch erhältlich, daß man einen Farbstoff, der frei von ionischen Gruppen ist und ≧2 $NH_2$-Gruppen besitzt, die vorzugsweise so angeordnet sind, daß sie sich nicht an der Mesomerie des Chromophors beteiligen, mit einer solchen Menge eines (cyclo)aliphatischen Diisocyanats, gegebenenfalls in Gegenwart eines organischen Lösungsmittels, unter Addition umsetzt, daß das Reaktionsprodukt noch mindestens zwei freie -NCO-Gruppen enthält, und man anschließend dieses Reaktionsprodukt mit einem (cyclo)aliphatischen Diamin, gegebenenfalls in Gegenwart eines organischen Lösungsmittels, unter Addition umsetzt.

Der aminogruppenhaltige Farbstoff kann den verschiedensten Farbstoffklassen angehören, z.B. der Triphenylmethan-, Oxazin-, Dioxazin-, Thiazin-, Nitro-, Cumarin-, Chinophthalon-, Benzodifuranon-, Perylen-, Naphthalimid-, Phthalocyanin-, insbesondere aber der Azo- oder Anthrachinon-Reihe.

Die folgenden Farbstoffe werden bevorzugt eingesetzt:

1. Polyazofarbstoffe der Formel

$R\text{-}N=N\text{-}X\text{-}N=N\text{-}R_1$ I

in der

R, $R_1$ einen substituierten Phenyl-, substituierten Naphthyl- oder substituierten 5-Hydroxypyrazol-4-yl-Rest und

X ein Brückenglied bezeichnen, wobei die Farbstoffe ≧2 $NH_2$-Gruppen enthalten.

Beispiele für R und $R_1$ sind:

a) 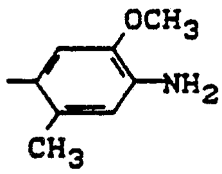 , b) 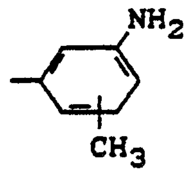 , c) 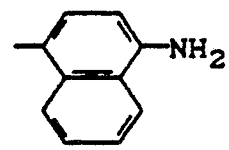 ,

d) 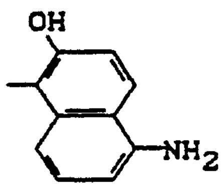 , e) 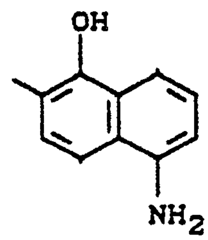 ,

f) 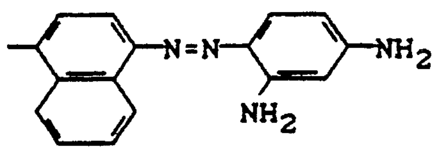 , g) 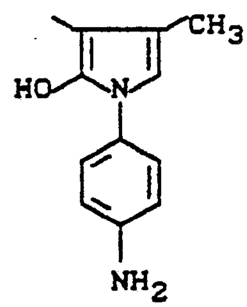 ,

h) 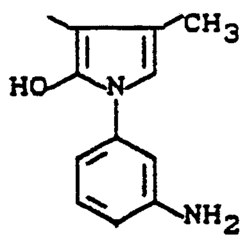 , i) 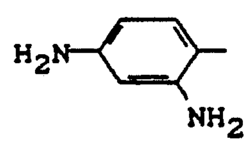 ,

k) 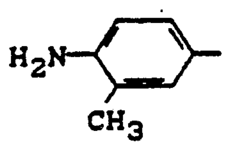 .

Beispiele für X sind:

a) 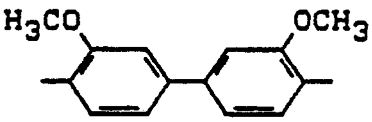 , b) 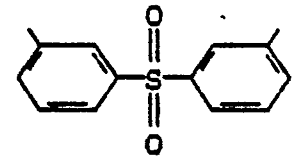 ,

c) 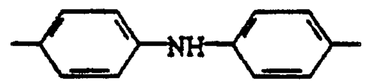 , d) 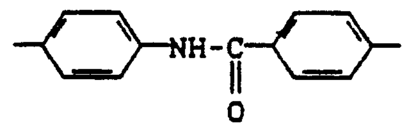

e) 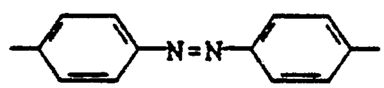 , f) 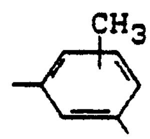 ,

g) 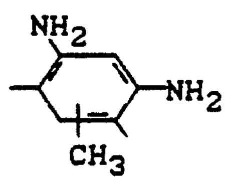 .

Individuelle Beispiele für Farbstoffe der Formel I sind:

| | | |
|---|---|---|
| Rg) | - Xe) | - Rg) |
| Rg) | - Xd) | - Rg) |
| Rc) | - Xc) | - Rc) |
| Rc) | - Xe) | - Rc) |
| Rd) | - Xa) | - Rd) |
| Ra) | - Xa) | - Ra) |
| Rc) | - Xa) | - Rc) |
| Rf) | - Xe) | - Rf) |
| Rf) | - Xa) | - Rf) |
| Ri) | - Xf) | - Ri) |
| Rg) | - Xa) | - Rg) |
| Rh) | - Xa) | - Rh) |
| Rg) | - Xc) | - Rg) |
| Rg) | - Xh) | - Rg) |
| Re) | - Xc) | - Re) |
| Rf) | - Xb) | - Rf) |
| Ra) | - Xb) | - Ra) |
| Rh) | - Xd) | - Rh) |
| Rh) | - Xe) | - Rh) |
| Rg) | - Xb) | - Rg) |
| Rg) | - Xg) | - Rb) |
| Rk) | - Xa) | - Rk) |

2. ≧2 $NH_2$-Gruppen enthaltende Monoazofarbstoffe, vorzugsweise der Benzol-azo-benzol-, Benzol-azo-pyrazolon-, Benzol-azo-acetessigarylid- oder Benzol-azo-naphthalin-Reihe, z.B.:

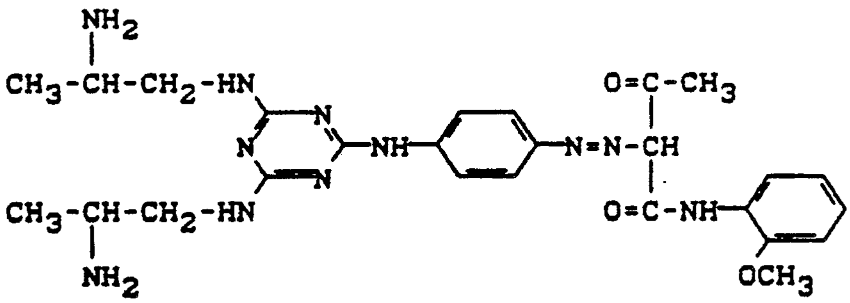

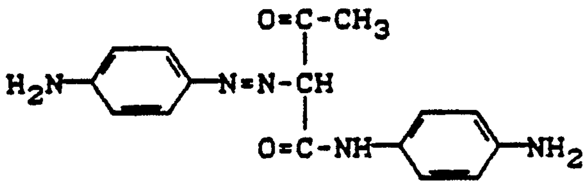

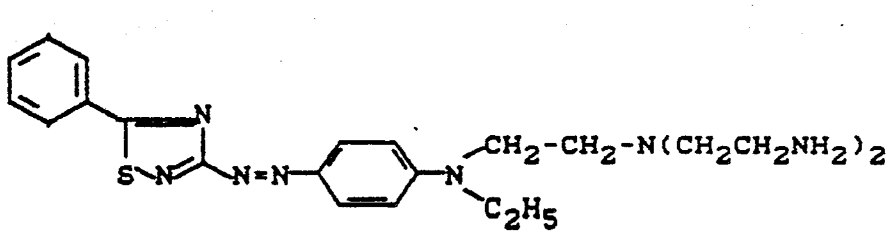

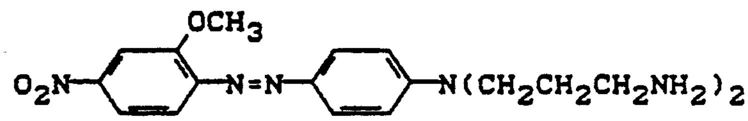

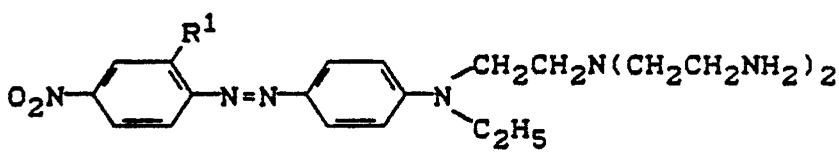

$R^1$ = Cl oder $-OCH_3$

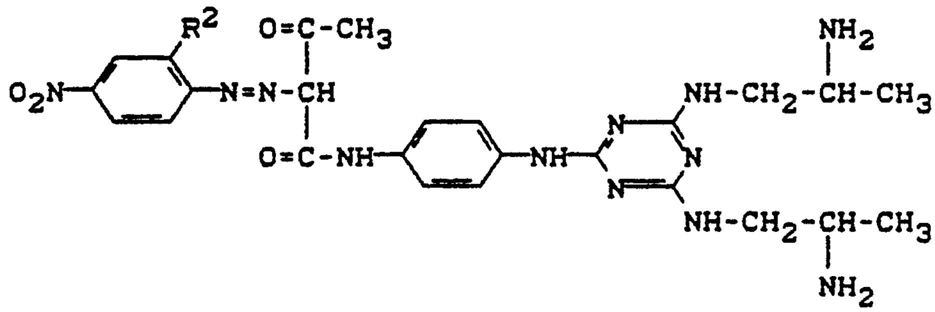

$R^2$ = Cl oder $-OCH_3$

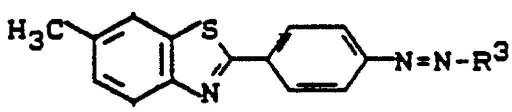

$R^3$ =

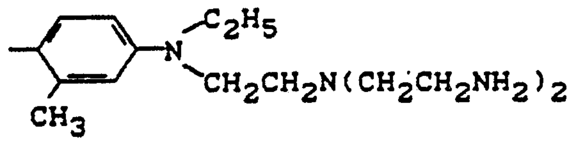

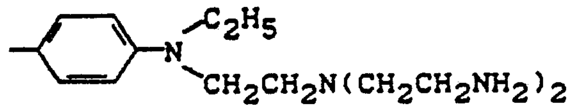

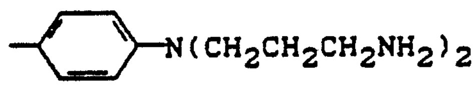

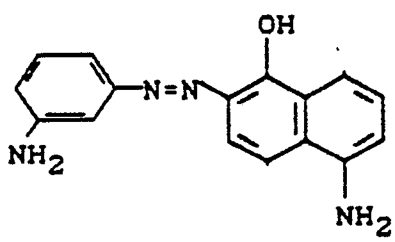

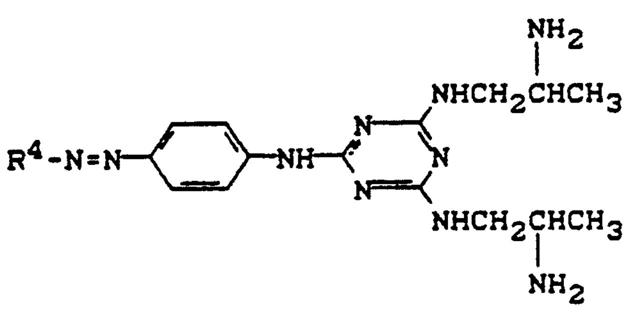

$R^4$ =

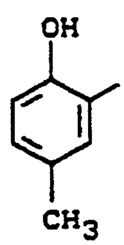

,

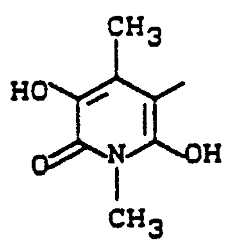

,

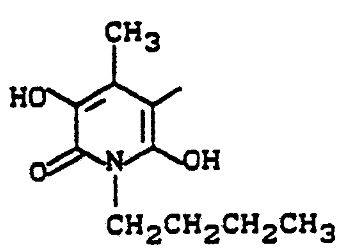

,

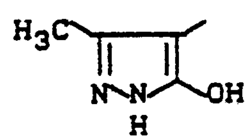

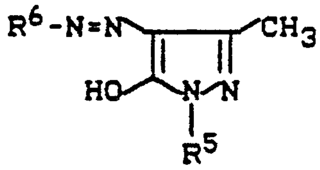

$R^5$ = 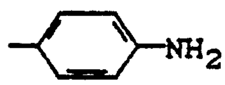 , 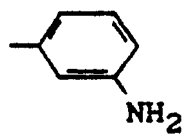

$R^6$ = 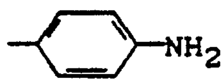 , 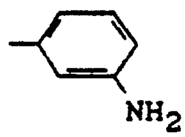

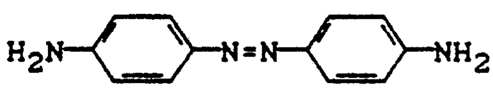

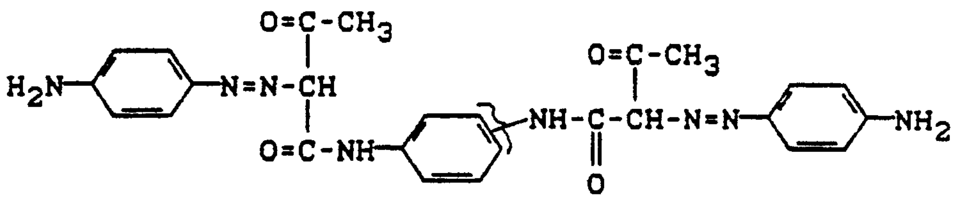

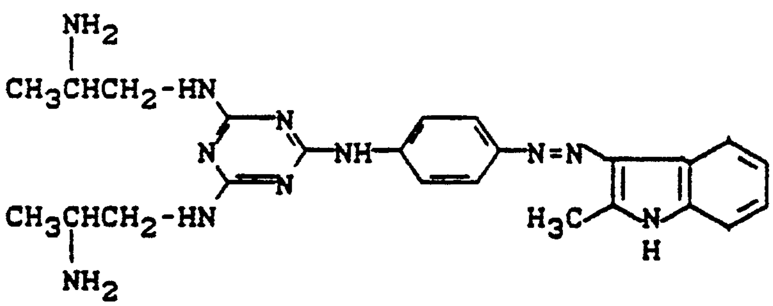

3. Anthrachinonfarbstoffe, die ≥2 $NH_2$-Gruppen enthalten, z.B.:

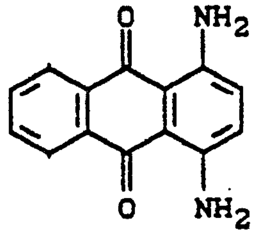

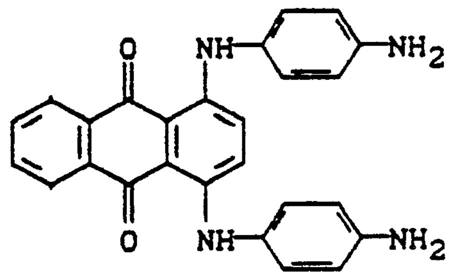

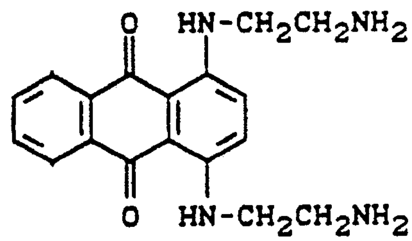

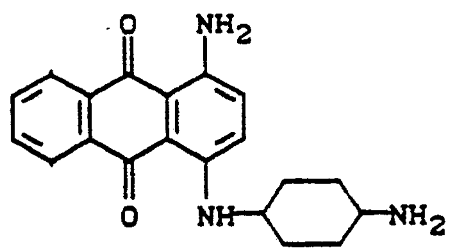

Als Beispiel für einen Phthalocyaninfarbstoff sei

$$Cu\text{-}Pc\text{-}(3)(SO_2NH\text{-}C_3H_6\text{-}\underset{\displaystyle CH_3}{\underset{|}{N}}\text{-}C_3H_6\text{-}NH_2)_{\approx 3}$$

aufgeführt.

Weitere besonders geeignete Farbstoffe sind z.B. auch die aus "Colour Index" bekannten Farbstoffe mit den Constitution Nos. 11245, 11255, 11275, 11285, 11290, 11300, 11310, 11330, 11335, 11365, 21000, 21010, 21020, 21030, 62025, 62030, 63020, 64500, 73315, 73320, 73330.

Die erfindungsgemäß einsetzbaren Farbstoffe sind literaturbekannt oder in Analogie zu literaturbekannten Farbstoffen herstellbar.

Als (cyclo)aliphatische Diisocyanate kommen vorzugsweise in Betracht:

Diisocyanate der Formel

$OCN\text{-}R^7\text{-}NCO$

in der $R^7$ einen (cyclo)aliphatischen Rest mit 2 bis 24 C-Atomen bezeichnet. Beispielhaft seien genannt: 3-Isocyanatomethyl-3,5,5-trimethylcyclohexylisocyanat, 1,2-Ethylendiisocyanat, 1,2-Propylendiisocyanat, 1,2-Butylendiisocyanat, 1,3-Butylendiisocyanat, Tetramethylendiisocyanat, Hexamethylendiisocyanat, Octamethylen diisocyanat, 2,4,4-Trimthylhexamethylendiisocyanat, Nonamethylendiisocyanat, 2,2,4-Trimethylhexamethylendiisocyanat, Decamethylendiisocyanat, 1,12-Dodecandiisocyanat, 2,11-Dodecandiisocyanat, Isocyanate der Formel

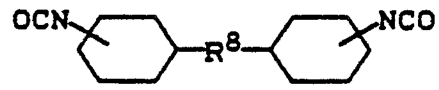

in der $R^8$ einen $C_{1-4}$-Alkylrest bezeichnet, z.B.:

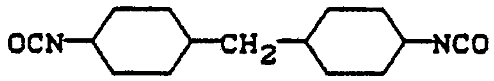 , 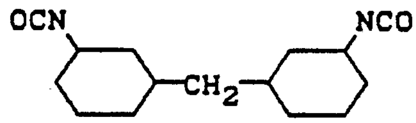 ,

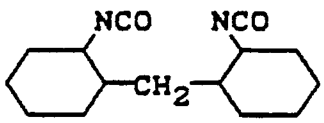 , 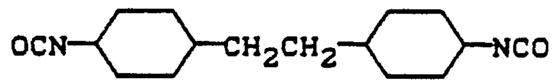 ,

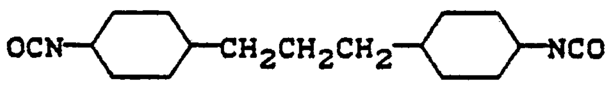 ,

Diisocyanate der Formel

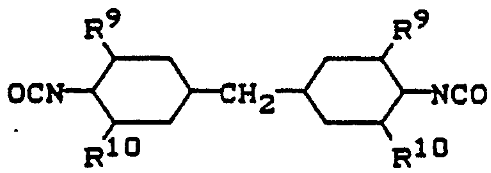

in der
$R^9$, $R^{10}$ Wasserstoff, Methyl, Ethyl bezeichnen,
z.B. das Diisocyanat der Formel

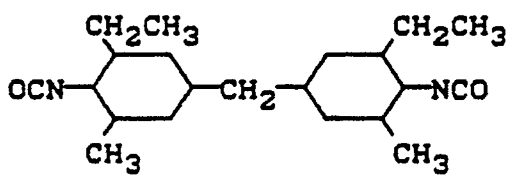 ,

Cyclobutan-1,3-diisocyanat, Cyclohexan-1,3-diisocyanat, Cyclohexan-1,4-diisocyanat sowie das Trimerisationsprodukt aus 2 Mol 2,4-Toluylendiisocyanat und 1 Mol Hexamethylendiisocyanat.

Die erfindungsgemäß einsetzbaren Diisocyanate sind literaturbekannt oder in Analogie zu literaturbekannten Verfahren herstellbar.

Als (cyclo)aliphatische Diamine kommen vorzugsweise in Betracht:
Diamine der Formel
$H_2N-R^{11}-NH_2$
in der $R^{11}$ einen (cyclo)aliphatischen Rest mit 2 bis 24 C-Atomen bezeichnet.

Vorzugsweise werden solche Diamine eingesetzt, die man sich durch Ersatz der NCO-Gruppen der vorstehend aufgeführten Diisocyanate durch Aminogruppen abgeleitet denken kann.

Besonders bevorzugt sind:

$H_2N-(CH_2)_6-NH_2$

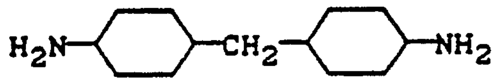

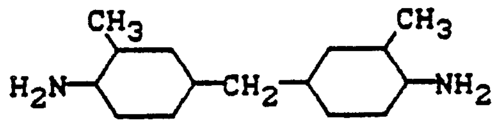

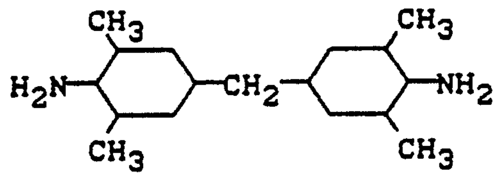

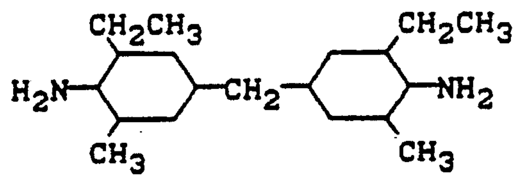

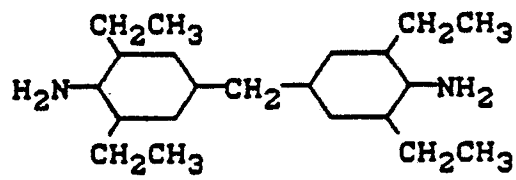

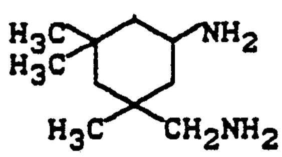

Die erfindungsgemäß einsetzbaren Diamine sind literaturbekannt oder können in Analogie zu literaturbekannten Verfahren hergestellt werden.

Als Lösungsmittel für die Additionsreaktion zwischen dem aminogruppenhaltigen Farbstoff und dem Diisocyanat bzw. zwischen dem NCO-Gruppen enthaltenden Prepolymer und dem Diamin eignen sich insbesondere Ester, z.B. Ethylacetat und Butylacetat, und Ketone, z.B. Aceton und besonders Methylethylketon.

Vorzugsweise wird zur Herstellung des NCO-Gruppen enthaltenden Reaktionsprodukts 1 Val des Farbstoffs (bezogen auf reaktionsfähige $NH_2$-Gruppen) mit ≧2 Val des Diisocyanats umgesetzt.

Die Umsetzung des prepolymeren Additionsprodukts mit dem (cyclo)aliphatischen Diamin kann sowohl bei einem Überschuß an NCO-Gruppen wie auch mit einem Überschuß an $NH_2$-Gruppen erfolgen. Bevorzugt arbeitet man bei einem NCO-:$NH_2$-Äquivalentverhältnis von 1,2:1-1:1,2, besonders bevorzugt bei etwa 1:1. Für den Fall, daß das so erhaltene Reaktionsprodukt nicht umgesetzte NCO-Gruppen enthält, kann man diese gewünschtenfalls, z.B. durch Reaktion mit monofunktionellen Alkoholen, wie Methanol, Ethanol, i-Propanol abreagieren lassen; für den Fall, daß das bei der Umsetzung des prepolymeren Additionsprodukts mit dem Diamin erhaltene Reaktionsprodukt $NH_2$-Gruppen enthält, kann man diese gewünschtenfalls, z.B. durch Reaktion mit monofunktionellen Isocyanaten, wie Methylisocyanat, abreagieren lassen.

Wenn die prepolymeren Additionsprodukte noch über freie NCO-Gruppen verfügen, so stehen diese für entsprechende Umsetzungen, z.B. zur (Poly)Addition von Diaminen und/oder (Poly)Glykolen zur Verfügung. Verfügen die prepolymeren Additionsprodukte noch über freie $NH_2$-Gruppen, so stehen diese ebenfalls für entsprechende Reaktionen, z.B. zur Addition an NCO-gruppenhaltige Verbindungen oder an Epoxide zur Kettenverlängerung oder für Vernetzungsreaktionen zur Verfügung.

Die Herstellung des NCO-Gruppen enthaltenden Reaktionsproduktes sowie dessen weitere Umsetzung werden vorzugsweise in einem Lösungsmittel durchgeführt. Ebenso ist es bevorzugt, bei Raumtemperatur zu arbeiten. Das erhaltene Farbmittel wird, gegebenenfalls nach Entfernung des Lösungsmittels, z.B. durch Filtrieren oder Abdunsten, isoliert,

In manchen Fällen empfiehlt es sich, das Farbmittel vor seiner Verwendung zur Farbgebung durch eine Lösungsmittelbehandlung zu reinigen, um es von nicht oder nur teilweise umgesetzten Farbstoffen und/oder Ausgangsprodukten zu befreien. Diese Behandlung kann z.B. durch Waschen oder Extrahieren erfolgen. Als Lösungsmittel eignen sich insbesondere die oben bei der Herstellung des Farbmittels erwähnten. In besonderen Fällen kann die Reinigung auch mit dem Medium erfolgen, das durch (An)Lösen nicht ausreagierter Farbkörperanteile Ursache der Migrationstendenz in diesem Falle ist. So kann es sich empfehlen, Farbmittel, die zur Einfärbung von weich gemachten Kunststoffen (PVC) vorgesehen sind, vor ihrem Einsatz durch Behandlung mit einem Kunststoffweichmacher, z.B. Dibutylphthalat, zu reinigen. Die bei der Herstellung der Farbstoffe oder bei ihrer Reinigung, z.B. durch Wäsche oder Extraktion, verwendeten Lösungsmittel können nach Rektifikation erneut für die gleichen Zwecke eingesetzt werden, so daß sie in einem, insbesondere aus ökologischen Gründen bevorzugten Kreisprozeß Verwendung finden. Die, gegebenenfalls gereinigten, Farbmittel können als solche oder in Form von Zubereitungen zur Färbung und Pigmentierung der verschiedenartigsten Substrate, insbesondere organische makromolekulare Stoffe, Verwendung finden.

Die erfindungsgemäßen Farbmittel eignen sich aufgrund ihrer Licht- und Migrationsechtheit für die verschiedensten Pigmentapplikationen. So können sie zur Herstellung von sehr echt pigmentierten Systemen, wie Mischung mit anderen Stoffen, Zubereitungen, Anstrichmitteln, Druckfarben, gefärbtem Papier und gefärbten makromolekularen Stoffen verwendet werden. Unter Mischung mit anderen Stoffen können z.B. solche mit anorganischen Weißpigmenten wie Titandioxid (Rutil) oder mit Zement verstanden werden. Zubereitungen sind z.B. Flushpasten mit organischen Flüssigkeiten oder Teige und Feinteige mit Wasser, Dispergiermitteln und gegebenenfalls Konservierungsmit teln. Die Bezeichnung Anstrichmittel steht z.B. für physikalisch oder oxidativ trocknende Lacke, Einbrennlacke, Reaktionslacke, Zweikomponentenlacke, Dispersionsfarben für wetterfeste Überzüge und Leimfarben. Unter Druckfarben sind solche für den Papier-, Textil- und Blechdruck zu verstehen. Die makromolekularen Stoffe können natürlichen Ursprungs sein wie Kautschuk, durch chemische Modifikation erhalten werden wie Acetylcellulose, Cellulosebutyrat oder Viskose oder synthetisch erzeugt werden wie Polymerisate, Polyadditionsprodukte und Polykondensate. Genannt seien plastische Massen wie Polyvinylchlorid, Polyvinylacetat, Polyvinylpropionat, Polyolefine, z.B. Polyethylen oder Polyamide, Superpolyamide, Polymerisate und Mischpolymerisate aus Acrylester, Methacrylestern, Acrylnitril, Acrylamid, Butadien, Styrol sowie Polyurethane und Polycarbonate. Die mit den beanspruchten Produkten pigmentierten Stoffe können in beliebiger Form vorliegen.

Die erfindungsgemäßen Farbmittel werden vorzugsweise zur Farbgebung von Lackierungen, Beschichtungen und Kaschierungen auf PUR-Basis von Flächengebilden, z.B. aus Textil, Leder, geschäumten und kompakten Kunststoffen, Holz, Metall, insbesondere nach dem aus der DE-OS 26 37 115 (US-PS 4 108 842) bekannten Verfahren der PUR-Reaktivlackierung verwendet.

## Beispiele

In diesem Beispielteil kommen die folgenden Farbstoffe vor, die aus schreibtechnischen Gründen in den Tabellen durch die angegebenen Großbuchstaben abgekürzt werden:

A

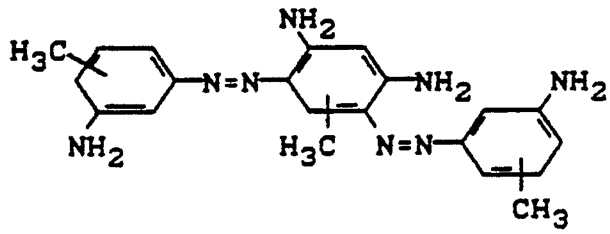

B

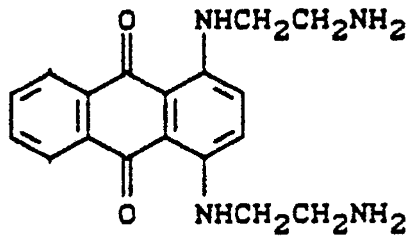

C

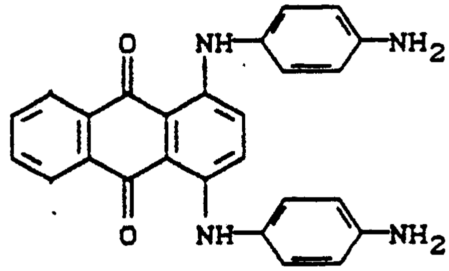

D

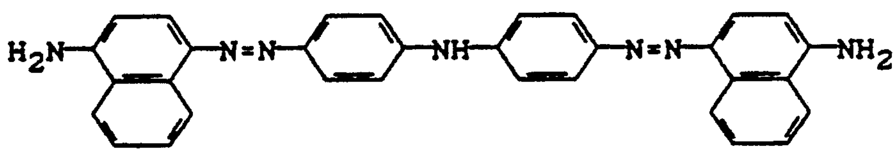

E 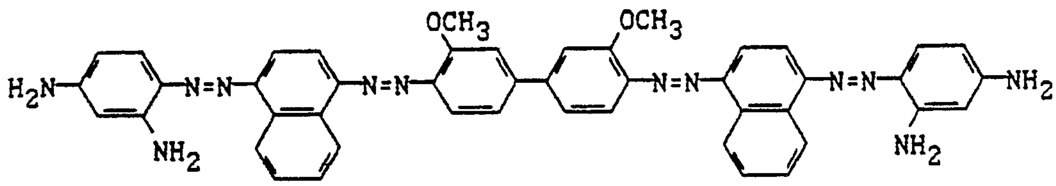

F 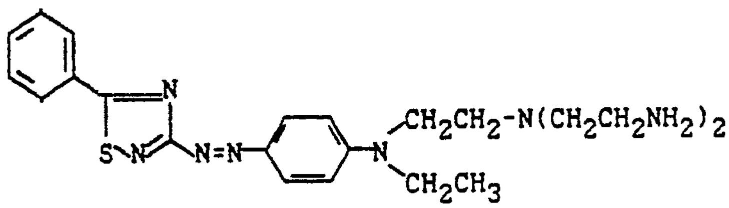

G 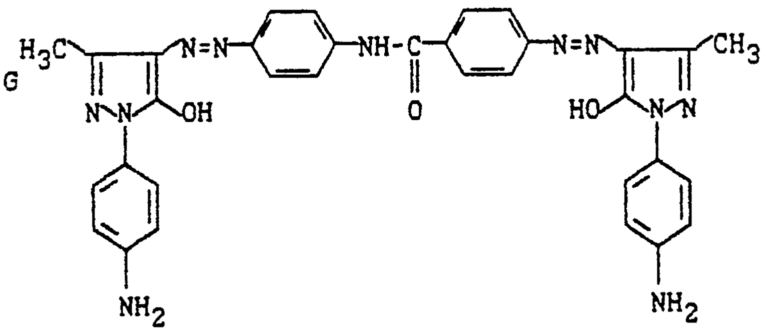

H 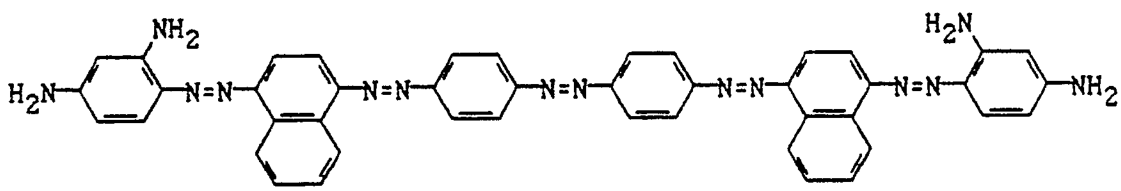

I 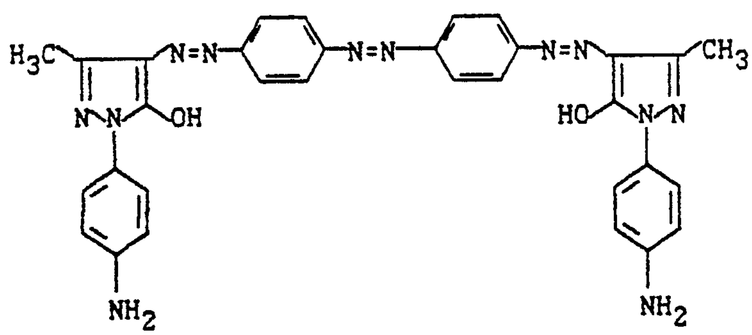

J 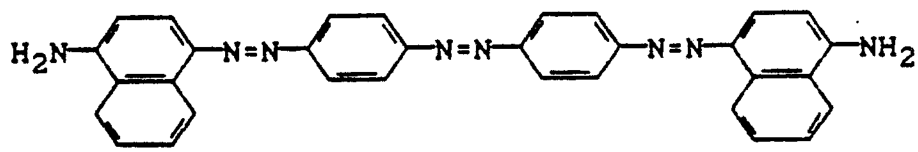

K 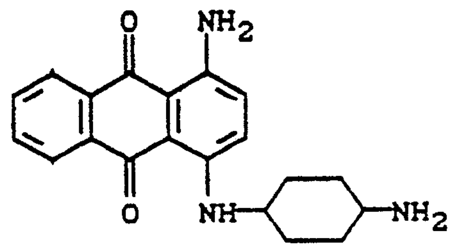

L 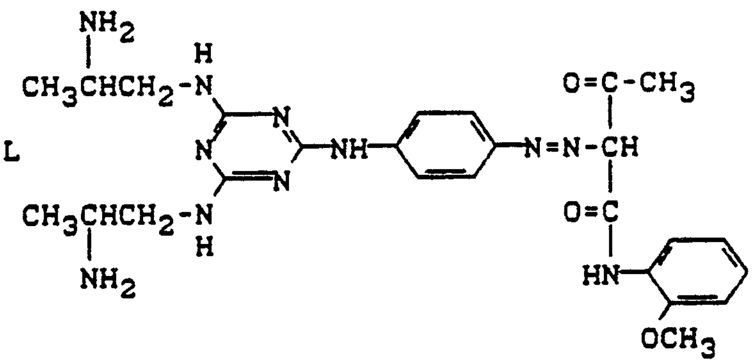

M 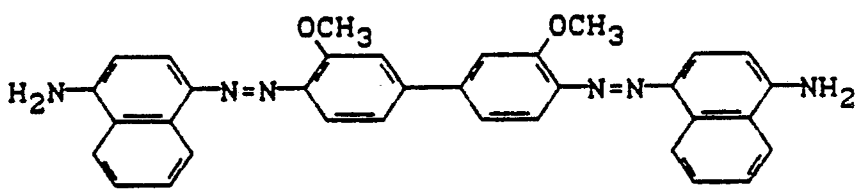

N 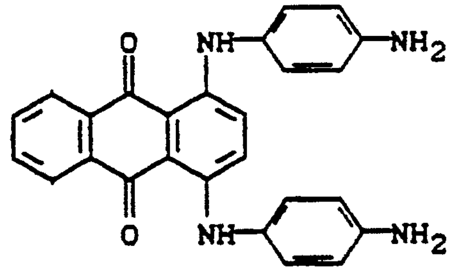

Beispiel 1

a) 100 g 3-Isocyanatomethyl-3,5,5-trimethylcyclohexylisocyanat werden in 300 g Methylethylketon gelöst. Zu dieser Lösung gibt man 0,45 Val jeweils eines der unter 1.1.-1.11. aufgeführten Aminofarbstoffe und rührt den Ansatz 30 Min. bei Raumtemperatur.

b) Parallel dazu bereitet man eine Lösung, die 0,425 Val des unter 1.1.-1.11. zu dem entsprechenden Farbstoff angegebenen Diamins in X g Methylethylketon enthält, wobei das Diamin in der Ketiminform vorliegt.

$$X = 300 - \frac{\text{Molekulargewicht des Diamins}}{2}$$

Die nach 1a) und 1b) erhaltenen Lösungen werden bei Raumtemperatur unter intensivem Rühren schnell zusammengegeben. Sofort nach Beendigung der Zugabe wird der Ansatz auf eine Glasplatte oder in eine Blechschale gegossen. Nach dem Abschluß der exothermen Reaktion wird die erstarrte und anschließend luftgetrocknete Masse im Mörser pulverisiert.

Das erhaltene Pulver wird mit Methylethylketon ausgewaschen und abgenutscht, bis das Farbmittel frei ist von löslichem, d.h. nicht umgesetztem Ausgangsfarbstoff. Die erhaltenen Farbmittel haben die in der folgenden Tabelle angegebenen Farbtöne.

| | Farbstoff | Diamin | Farbton |
|---|---|---|---|
| 1.1 | A | $H_2N-(-CH_2-)_6-NH_2$ | rotbraun |
| 1.2 | A | 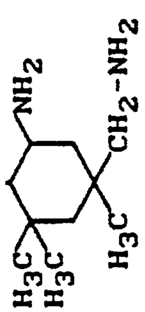 | rotbraun |
| 1.3 | B | „ | blauviolett |
| 1.4 | C | „ | blau |
| 1.5 | D | 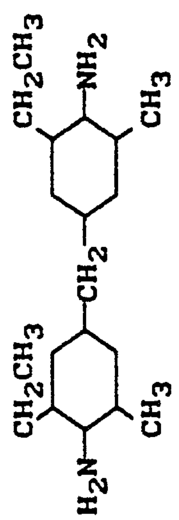 | rotbraun |
| 1.6 | E | 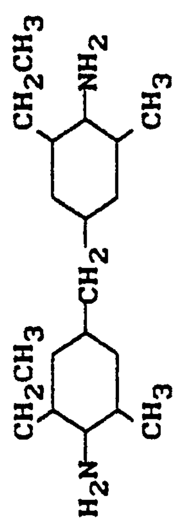 | blauschwarz |
| 1.7 | F | „ | rotviolett |
| 1.8 | G | „ | gelb |
| 1.9 | A | „ | rotbraun |
| 1.10 | H | „ | violett |
| 1.11 | I | „ | gelbbraun |

Beispiel 2

a) 100 g des Diisocyanats der Formel

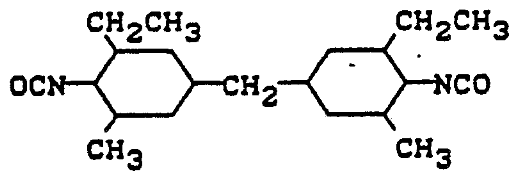

werden in 300 g Methylethylketon gelöst. Zu dieser Lösung gibt man 0,28 Val jeweils eines der unter 2.1.-2.5. aufgeführten Aminofarbstoffe und rührt den Ansatz 30 Min. bei Raumtemperatur.

b) Parallel dazu bereitet man eine Lösung, die 0,28 Val des unter 2.1.-2.5. zu dem entsprechenden Farbstoff angegebenen Diamins in Methylethylketon enthält, wobei das Diamin in der Ketiminform vorliegt.

Die nach 2a) und 2b) erhaltenen Lösungen werden bei Raumtemperatur unter intensivem Rühren schnell zusammengegeben. Sofort nach Beendigung der Zugabe wird der Ansatz auf eine Glasplatte oder in eine Blechschale gegossen. Nach Abschluß der exothermen Reaktion wird die erstarrte und anschließend luftgetrocknete Masse im Mörser pulverisiert. Das erhaltene Pulver wird mit Methylethylketon ausgewaschen und abgenutscht bis das Farbmittel frei ist von löslichem, d.h. nicht umgesetztem Ausgangsfarbstoff. Die erhaltenen Farbmittel haben die in der folgenden Tabelle angegebenen Farbtöne.

| | Farbstoff | Diamin | Farbton |
|---|---|---|---|
| 2.1 | E | 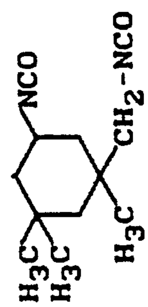 | dunkelbraun |
| 2.2 | J | " | blauschwarz |
| 2.3 | K | " | blau |
| 2.4 | E | 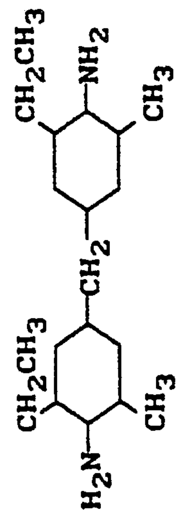 | dunkelblau |
| 2.5 | J | " | blauschwarz |

Beispiel 3

In Analogie zu den Beispielen 1a) und 2a) wird Hexamethylendiisocyanat mit den unter 3.1.-3.3. angegebenen Farbstoffen zum NCO-Gruppen enthaltenden Prepolymeren umgesetzt. Diese werden in Analogie zu den Beispielen 1b) bzw. 2b) mit den in der folgenden Tabelle angegebenen Diaminen 3.1.-3.3. zu Farbmitteln umgesetzt, deren Farbton in der Tabelle angegeben ist.

| | Farbstoff | Diamin | Farbton |
|---|---|---|---|
| 3.1 | L | $H_2N-(-CH_2-)_6-NH_2$ | gelb |
| 3.2 | I | 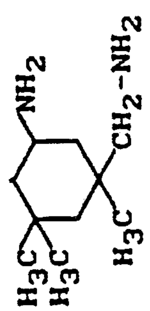 | gelbbraun |
| 3.3 | G | 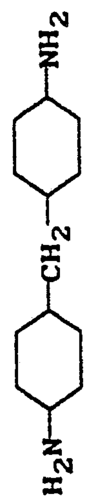 | gelb |

Beispiel 4

In Analogie zu den Beispielen 1a) und 2a) wird das Diisocyanat der Formel

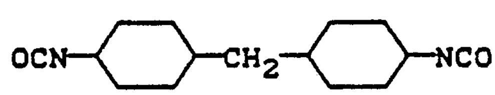

mit den unter 4.1.-4.4. angegebenen Farbstoffen zum NCO-Gruppen enthaltenden Prepolymeren umgesetzt. Diese werden analog zu den Beispielen 1b) bzw. 2b) mit den in der folgenden Tabelle angegebenen Diaminen 4.1.-4.4. zu Farbmitteln umgesetzt, deren Farbton ebenfalls in der Tabelle angegeben ist.

| | Farbstoff | Diamin | Farbton |
|---|---|---|---|
| 4.1 | E | $H_2N-(-CH_2-)_6-NH_2$ | blauschwarz |
| 4.2 | M | 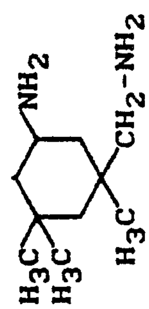 | weinrot |
| 4.3 | N | 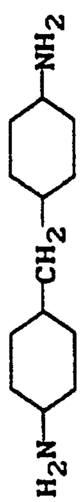 | grün |
| 4.4 | H | 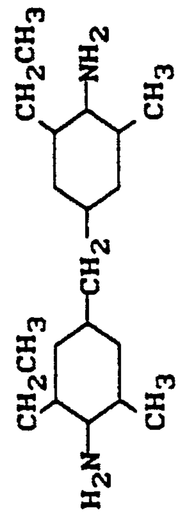 | violett |

Beispiel 5

a) 300 g 3-Isocyanatomethyl-3,5,5-trimethylcyclohexylisocyanat werden in 800 g Methylethylketon gelöst. Zu dieser Lösung gibt man 1,2 Val der unter 5.1.-5.9. angegebenen Farbstoffe und rührt den Ansatz 30 Min. bei Raumtemperatur. Anschließend gibt man 213 g des Diamins der Formel

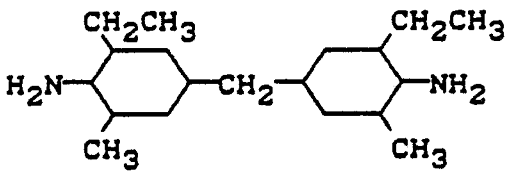

zu und gießt die Reaktionsmischung auf eine Glasplatte. Nach dem Trocknen wird das polymere Produkt im Mörser zerstoßen und beim Abnutschen dreimal mit Methylethylketon gewaschen. Man erhält in guten Ausbeuten Farbmitteln mit den in der folgenden Tabelle angegebenen Farbtönen.

| | Farbstoff | Farbton |
|---|---|---|
| 5.1 | A | rotbraun |
| 5.2 | B | blauviolett |
| 5.3 | C | blau |
| 5.4 | D | rotbraun |
| 5.5 | E | blauschwarz |
| 5.6 | F | rotviolett |
| 5.7 | G | gelb |
| 5.8 | H | violett |
| 5.9 | I | gelbbraun |

b) Zur Herstellung einer Pigmentzubereitung werden 250 g der nach 5.1.-5.9. erhaltenen Farbmittel unter Zusatz von 400 g der 80 gew.-%igen Lösung in Essigester eines Prepolymers, das durch Umsetzung von 0,74 Mol 3-Isocyanatomethyl-3,5,5-trimethylcyclohexylisocyanat, 0,06 Mol des Trimerisationsproduktes aus 2 Mol 2,4-Toluylendiisocyanat und 1 Mol Hexamethylendiisocyanat und 0,36 Mol eines Hydroxyl-Polyesters aus Adipinsäure, Neopentylglykol und Hexandiol-1,6 mit einer Hydroxylzahl von 66 und einem MG von 1700 hergestellt worden ist, sowie 350 g Methoxypropylacetat in einer Perlmühle gemahlen.

c) Zwecks Herstellung einer pigmentierten reaktiven PUR-Beschichtung setzt man 100 g einer ca. 80 gew.-%igen toluolischen Lösung eines Prepolymer, das durch Umsetzung von 0,78 Mol eines Gemischs aus 2,4- und 2,6-Toluylendiisocyanat, 0,07 Mol des Trimerisationsprodukts aus 2 Mol 2,4-Toluylendiisocyanat und 1 Mol Hexamethylendiisocyanat und 0,37 Mol eines Hydroxyl-Polyesters aus Adipinsäure, Neopentylglykol und Hexandiol-1,6 mit einer Hydroxylzahl von 66 und einem MG von 1700 hergestellt worden ist, mit 4,4 g des mit Methylethylketon blockierten Amins der Formel

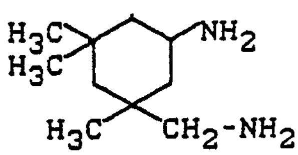

um und vermischt das erhaltene Reaktionsprodukt mit 2 g eines polyethermodifizierten Polysiloxans als Verlaufmittel und 8 g der gemäß 5.1.-5.9. erhaltenen Farbmittel.

Die Beschichtung von Spaltleder nach dem Umkehrverfahren kann z.B. gemäß Beispiel 1 der DE-OS 26 37 115 durchgeführt werden.

## Ansprüche

1. Farbmittel, die dadurch erhältlich sind, daß man einen Farbstoff, der frei von ionischen Gruppen ist und ≥2 $NH_2$-Gruppen besitzt, die vorzugsweise so angeordnet sind, daß sie sich nicht an der Mesomerie des Chromophors beteiligen, mit einer solchen Menge eines (cyclo)aliphatischen Diisocyanats, gegebenenfalls in Gegenwart eines organischen Lösungsmittels, unter Addition umsetzt, daß das Reaktionsprodukt

noch mindestens zwei freie NCO-Gruppen enthält, und man anschließend dieses Reaktionsprodukt mit einem (cyclo)aliphatischem Diamin, gegebenenfalls in Gegenwart eines organischen Lösungsmittels, unter Addition umsetzt.

2. Farbmittel gemäß Anspruch 1, dadurch gekennzeichnet, daß sie nach der Herstellung durch eine Lösungsmittelbehandlung von nicht oder nur teilweise umgesetzten Farbstoffen und/oder Ausgangsprodukten befreit worden sind.

3. Farbmittel gemäß den Ansprüchen 1 oder 2, die dadurch erhältlich sind, daß man einen Farbstoff der Azo- oder Anthrachinon-Reihe einsetzt.

4. Farbmittel gemäß einem oder mehreren der Ansprüche 1-3, dadurch erhältlich, daß man ein (cyclo)-aliphatisches Diisocyanat der Formel

$OCN-R^7-NCO$

in der $R^7$ einen (cyclo)aliphatischen Rest mit 2-24 C-Atomen bezeichnet, einsetzt.

5. Farbmittel gemäß einem oder mehreren der Ansprüche 1-4, dadurch erhältlich, daß man ein (cyclo)-aliphatisches Diisocyanat aus der Gruppe

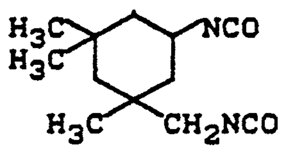 , 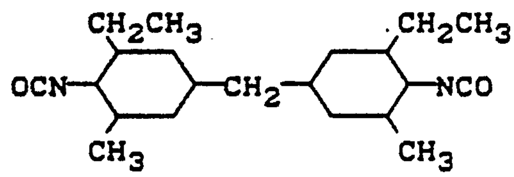 ,

$OCN-(CH_2-)_6-NCO$ , 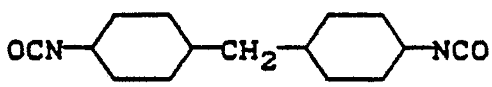

einsetzt.

6. Farbmittel gemäß einem oder mehreren der Ansprüche 1-5, dadurch erhältlich, daß man ein (cyclo)-aliphatisches Diamin der Formel

$H_2N-R^{11}-NH_2$

in der $R^{11}$ einen (cyclo)aliphatischen Rest mit 2-24 C-Atomen bezeichnet, einsetzt.

7. Farbmittel gemäß einem oder mehreren der Ansprüche 1-6, dadurch erhältlich, daß man ein (cyclo)-aliphatisches Diamin aus der Gruppe

$H_2N-(CH_2-)_6-NH_2$ , 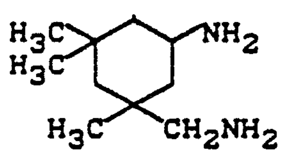 ,

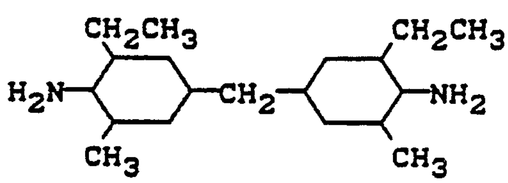 , 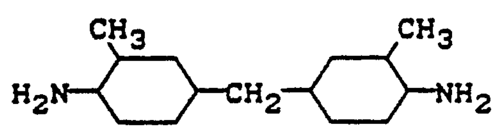

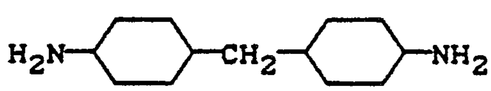

einsetzt.

8. Farbmittel gemäß einem oder mehreren der Ansprüche 1-7, dadurch erhältlich, daß man als Lösungsmittel für die Additionsreaktion zwischen dem Farbstoff und dem Diisocyanat und/oder für die Additionsreaktion zwischen dem NCO-Gruppen enthaltenden Prepolymer und dem Diamin einen Ester oder ein Keton, vorzugsweise Methylethylketon, einsetzt.

9. Verwendung der Farbmittel gemäß einem oder mehreren der Ansprüche 1-8 als solche oder in Form von Zubereitungen zur Färbung und Pigmentierung makromolekularer Stoffe.

10 Verwendung der Farbmittel gemäß einem oder mehreren der Ansprüche 1-8 als solche oder in Form von Zubereitungen zur Farbgebung von Lackierungen, Beschichtungen und Kaschierungen auf PUR-Basis.